# EUROPÄISCHE PATENTSCHRIFT

(11) **EP 1 833 150 B1**
(45) Veröffentlichungstag und Bekanntmachung des Hinweises auf die Patenterteilung: **14.07.2010**
(21) Anmeldenummer: 06004984.8
(22) Anmeldetag: 10.03.2006
(51) Int. Cl.: H02K 41/03

(54) **Stabaktuator**
Rod actuator
Actionneur à bielle

(43) Veröffentlichungstag der Anmeldung: 12.09.2007
(73) Patentinhaber: Hoerbiger Antriebstechnik GmbH, 86956 Schongau (DE); Compact Dynamics GmbH, 82319 Starnberg (DE)
(72) Erfinder: Kwittner, Götz, 18528 Bergen auf Rügen (DE); Hoffmann, Bernhard, 82319 Starnberg (DE); Gründl, Andreas, Dr., 82319 Starnberg (DE); Back, Ottmar, 82362 Weilheim (DE)
(74) Vertreter: Kitzhofer, Thomas

(56) Entgegenhaltungen:
- DE-A1- 4 134 730
- DE-A1- 10 150 414
- US-A- 3 746 937
- US-A- 4 546 277
- US-A- 5 777 403
- US-B1- 6 445 094

## Beschreibung

Die vorliegende Erfindung betrifft einen Stabaktuator gemäß dem Oberbegriff des Anspruches 1.

Ein derartiger Stabaktuator ist aus der DE 41 34 730 A1 bekannt.

Aus der WO/2000/001059 A1 (Siemens AG) ist ein Synchronlinearmotor bekannt, der einen Primärteil und einen Sekundärteil hat. Das Sekundärteil hat durch Permanentmagnete gebildete Pole und ist in Bewegungsrichtung länger als das Primärteil. Das Primärteil hat Primärteilnuten zur Aufnahme von ein- oder mehrphasigen Wicklungen und trägt magnetische wirksame Bauteile, die zu einer Änderung der Magnetkraft in Bewegungsrichtung des Linearmotors führen.

Die Anforderungen an elektrische Antriebe im Antriebs- und Fahrwerksbereich von Personenkraftfahrzeugen und Nutzfahrzeugen sind in der Regel höher als im Komfortbereich. Allerdings variieren die Spezifikationen von Applikation zu Applikation. Bei der Getriebeaktuatorik, also bei elektrischen Stellantrieben für die Automatisierung oder die Unterstützung manuell aufgebrachter Betätigungskräfte, sind eher moderate Ausgangsleistungen gefordert. Der Energiebedarf ist klein, da in der Regel Stellaufgaben mit Betätigungszeiten in der Größenordnung von etwa 50 Millisekunden bis etwa 500 Millisekunden zu bewältigen sind. Im Bereich automotiver Nebenantriebe sind die Anforderungen sowohl an die Temperatur- und Vibrationsfestigkeit in der Regel relativ hoch. Dies ist bei Getriebeaktuatoren darin begründet, dass der Anbauort meist dicht beim Verbrennungsmotor oder dessen Abgasanlage liegt. Bei zunehmend auch in Personenkraftfahrzeugen verwendeten Dieselaggregaten sind diese beiden Faktoren gegenüber Ottomotoren noch verstärkt. Im Gegensatz zum Komfortbereich ist auch die geforderte Lebensdauer im Antriebs- und Fahrwerksbereich deutlich höher. Eine elektrisch betätigte Sitzverstellung ist erheblich weniger oft aktiv als ein Getriebeaktuator, der bei jedem Schaltvorgang im Einsatz ist. Die Anforderungen an einen Getriebeaktuator eines Nutzkraftfahrzeuges liegen zum Beispiel bei etwa 5 Millionen Schaltvorgängen. Ähnliches gilt für aktive Lenkungen oder für unterstützte Lenkungen. Bekannte Anordnungen sind außerdem in der Herstellung sehr kostenintensiv und benötigen relativ viel Bauraum.

Es ist daher Aufgabe der vorliegenden Erfindung, einen Stabaktuator der im Oberbegriff des Anspruches 1 angegebenen Art zu schaffen, der einen universellen Einsatz bei Erreichung eines geringen Bauraumes und einer ausreichenden Leistungsdichte ermöglicht.

Die Lösung dieser Aufgabe erfolgt durch die Merkmale des Anspruches 1.

Der erfindungsgemäße Stabaktuator ist insbesondere für die Unterstützung von Schalt- oder Automatikgetrieben geeignet. Dabei hat die Erfindung erkannt, dass eine solche Anordnung geeignet ist, die hohen Umweltanforderungen zu erfüllen, die aus den mechanischen Schwingungs- und Schockbelastungen am Getriebe und am Fahrwerk resultieren und auch durch hohe Temperaturen und/oder Temperaturschwankungen verschärft sein können. Gleichzeitig bietet der erfindungsgemäße Stabaktuator bei immer enger werdenden Bauraumsituationen eine ausreichend hohe Leistungsdichte und situationsgerechte Bauform in wirtschaftlich attraktiver Ausführung.

Die vorliegende Erfindung betrifft im Einzelnen einen Stabaktuator mit geringem radialem Bauraumerfordernis. Ein derartiger Stabaktuator ist zum Beispiel als Nebenantrieb im Automotive-Sektor zu verwenden. Sowohl im Antriebs- und Fahrwerksbereich, als auch im Komfortbereich spielen elektrische Aktuatoren eine zunehmende Rolle. Außerdem bieten sie als Ersatz für hydraulische Subsysteme erhebliche Vorteile im Hinblick auf die Kosten, die Systemintegration, sowie in der Funktionalität und in der Adaptierbarkeit an die jeweilige Situation und Anforderung. Insbesondere betrifft die Erfindung einen Stabaktuator, der als Getriebeaktuator, sowohl für handgeschaltete Getriebe und Kupplungen, für Achsgetriebe, als auch für Automatikgetriebe verwendet werden kann. Darüber hinaus kann der erfindungsgemäße Stabaktuator auch im Fahrwerksbereich (zum Beispiel aktives Fahrwerk oder aktive Lenkung, sowie Servolenkungen) sowie im Komfortbereich (zum Beispiel Sitzverstellung) eingesetzt werden.

Die Unteransprüche haben vorteilhafte Weiterbildungen der Erfindung zum Inhalt.

Vorzugsweise hat der Stabaktuator einen Ständer und einen Läufer, wobei der Ständer eine hohlzylindrische Gestalt aufweist und zumindest teilweise aus einem weichmagnetischen Material gebildet ist. In dem Ständer sind entlang dessen Umfangs mehrere Nuten im Abstand zueinander ausgebildet. In jeder der Nuten ist jeweils eine Ständerspule angeordnet. Der Ständer ist, durch einen Arbeitsluftspalt getrennt, mehreren Permanentmagnetringen des Läufers zugewandt, die jeweils zu dem Ständer hin abwechselnd magnetisch orientiert sind. Die Permanentmagnetringe weisen in einer Arbeitsbewegungsrichtung des Läufers in etwa eine Abmessung auf, die mit dem Mittenabstand zweier einander benachbarter Ständerspulen übereinstimmt. Die Permanentmagnetringe des Läufers sind an ihrer von dem Arbeitsluftspalt abgewandten Seite an einem Läuferrohr angeordnet, das mit einem Stab verbunden ist. Der Stab ist relativ zu dem Ständer beweglich und bildet zumindest einen Teil des magnetischen Rückschlusses des Stabaktuators. Außerdem ist der Stab dazu eingerichtet, eine Betätigungskraft an seinem einen Ende aufzunehmen und an seinem anderen Ende die Betätigungskraft, von einer durch den Läufer aufgebrachten Motorkraft überlagert, abzugeben.

Dabei liegt der Erfindung vorzugsweise das Konzept zugrunde, den Stabaktuator als den Stab umgebenden Linearmotor auszugestalten, wobei der Stab einerseits dazu dient, eine externe, zum Beispiel manuell eingeleitete, Kraft an ein nachgeschaltetes Aggregat zu leiten. Zum anderen dient der Stab dazu, als magnetischer Rückschluss für den Linearmotor zu dienen. Damit hat der Stab einen Doppelnutzen und eine Doppelfunktion, wodurch die Gesamtanordnung sehr schlank bauend ausgeführt werden kann. Außerdem kann die externe, manuell eingeleitete Kraft oder Bewegung durch den Linearmotor geeignet verstärkt werden, indem dieser von außen in den Stab eingeleiteten Kraft oder Bewegung die durch den Linearmotor auf den Stab aufgebrachte Bewegung oder Kraft überlagert wird.

Bei einer bevorzugten Ausführungsform der Erfindung ist der Stab koaxial zu dem Ständer in dessen Innern angeordnet. Des Weiteren ist der Stab in dem Ständer an dessen Innenwand gleitend beweglich gelagert.

Dabei kann der Ständer ein dünnwandiges Tragrohr aufweisen, das an einer Stirnseite des Läuferrohrs aus diesem herausragt und zur Abstützung an einem ortsfesten Teil eingerichtet ist. Das ortsfeste Teil ist zum Beispiel ein Aggregat, in das die Bewegung/Kraft von dem Stab einzuleiten ist.

Vorzugsweise ist der Stab im Inneren des Ständers angeordnet und ragt zumindest an einem Ende aus diesem heraus. In diesem Fall ist der Linearmotor als Innenläufer ausgestaltet. Alternativ dazu ist es jedoch auch möglich und im Bereich der Erfindung, die Anordnung "umzustülpen", so dass der Stab selbst ein Rohr ist und der Linearmotor in dessen Innern angeordnet ist.

Die Ständerspulen sind in dem Ständer so angeordnet, dass ihre Mittellängsachse mit der Arbeitsbewegungsrichtung des Läufers fluchtet.

Vorzugsweise ist der Ständer aus im Wesentlichen scheibenförmigen, zum Beispiel geblechten Weicheisenelementen gebildet. Es ist jedoch auch möglich, den Ständer aus gepresstem Eisenpulver herzustellen, dessen Partikel durch Kunststoff miteinander verbunden (aber elektrisch voneinander isoliert sind).

In einer Ausführungsform der Erfindung ist das Läuferrohr an seinen beiden Stirnseiten verschlossen. Dabei kann an einer Stirnseite des Läuferrohres eine starre Verbindung des Läuferrohres mit dem Stab, zum Beispiel durch Verschweißen, Verpressen, oder dergl. vorgesehen sein. An der anderen Stirnseite des Läuferrohres kann eine Öffnung vorgesehen sein, durch die das Tragrohr des Ständers in Arbeitsbewegungsrichtung verschiebbar herausragt. In dem Tragrohr kann der Stab im Gleitsitz in Arbeitsbewegungsrichtung verschiebbar aufgenommen sein.

Der Ständer kann erfindungsgemäß wenigstens zwei Gruppen von Ständerspulen aufweisen, die mit phasenversetztem Strom beaufschlagt werden. Dabei sind die Gruppen der Ständerspulen in Abhängigkeit von ihrer Anzahl in Arbeitsbewegungsrichtung des Läufers entlang des Ständers so versetzt, dass jeweils wenigstens eine Gruppe von Ständerspulen mit den Permanentmagnetringen des Läufers im Wesentlichen fluchtet.

Der Ständer ist zumindest teilweise ein weichmagnetischer Formkörper, der zum Beispiel aus gepresstem und/oder gesintertem Metallpulver ist.

Der Stab trägt einen Kraft- und/oder einen Wegsensor, um die an seinem einen Ende aufgenommene Betätigungskraft und/oder eine Verschiebung oder Position des Stabes relativ zu dem Ständer zu erfassen und die erfasste Kraft/den erfassten Weg wiedergebende Signale an eine elektronische Steuereinheit zu leiten.

Die elektronische Steuereinheit ist vorzugsweise dazu eingerichtet bzw. programmiert, aus den Kraft-/Weg-Signalen Ansteuersignale für die Ständerspulen zu erzeugen, so dass in Abhängigkeit von der am einen Ende des Stabes eingeleiteten Größe in Abhängigkeit von einer Verstärkungsfunktion am anderen Ende des Stabes eine entsprechende Ausgangsgröße zur Verfügung steht.

Vorzugsweise weist die elektronische Steuereinheit einen DC/DC-Wandler auf, der an seiner Eingangsseite mit einer Gleichstromversorgung verbunden ist, und an dessen Ausgangsseite eine Pufferkapazität angeschlossen ist, so dass bei einem Betrieb des Stabaktuators auftretende Lastspitzen im Wesentlichen rückwirkungsfrei für die Gleichstromversorgung sind. Damit kann erfolgreich dem Umstand Rechnung getragen werden, dass die immer stärker belasteten Bordnetze in Kraftfahrzeugen mit stark schwankendem Energiebedarf, Spannungseinbrüchen und Stromspitzen konfrontiert sind. Daher stellt die Erfindung einen lokalen Energiespeicher in Verbindung mit einer dezentralen elektronischen Steuerung als einen wirkungsvollen Lösungsansatz bereit.

Grundsätzlich sind auch noch andere Anwendungsmöglichkeiten des vorstehend beschriebenen Linearaktors denkbar, die alle von der vorliegenden Erfindung umfasst sind.

Der Einsatz des erfindungsgemäßen Stabaktuators bzw. der erfindungsgemäßen Schaltunterstützung an Fahrzeuggetrieben hängt u.a. vor dem Hintergrund der Bauraumverhältnisse entscheidend von der Integrationsfähigkeit am Getriebe ab. Da bei NKW-Getrieben die Schalt- und Wählbewegung klar voneinander getrennt sind und somit am Getriebeschalthebel keine Überlagerung von Schalt- und Wählbewegungen stattfindet, ist es möglich, die erfindungsgemäße Schaltunterstützung (Stabaktuator) fest am Getriebegehäuse anzubauen.

In modernen PKW- und Light-Truck-Getrieben wird dagegen die Schalt- und Wählbewegung meist überlagert. Dies bedeutet, dass der Krafteinleitungspunkt am Getriebeschalthebel räumlich variiert.

In den eingesetzten Außenschaltelementen wird dies dadurch kompensiert, dass zwischen dem getriebegehäusefesten Abstüt zpunkt, z.B. des Schaltseilzuges, und dem Anlenkpunkt zum Getriebeschalthebel eine Gelenkverbindung vorgesehen ist.

Bei fester Montage einer äußeren Schaltkraftunterstützung am Getriebe müsste diese vor dem Abstützpunkt des Schalters in die Schaltung integriert werden. Dies ist aus Bauraumgründen äußerst problematisch.

Er ist daher bei einer weiteren bevorzugten Ausführungsform des erfindungsgemäßen Stabaktuators zur günstigen Ausnutzung des im Bereich der Außenschaltung am Getriebe verfügbaren Bauraums vorgesehen, den Stabaktuator bzw. die Schaltunterstützung gelenkig am Getriebegehäuse anzubinden.

Ferner haben im Rahmen der Erfindung durchgeführte Untersuchungen ergeben, dass die Verstärkung der durch den Fahrer aufgebrachten Schaltkraft in der Regel proportional entsprechend einer vorgegebenen Kennlinie erfolgt.

Zur Verbesserung des Schaltkomforts wäre es vorteilhaft, bei kaltem Getriebe eine größere Verstärkung der vom Fahrer eingeleiteten Schaltkraft vorzunehmen, als bei Betriebstemperatur.

Daher ist bei einer weiteren bevorzugten Ausführungsform vorgesehen, dass in der elektronischen Steuerung ein Temperatursensor integriert ist. Hierdurch ist es möglich, die Temperatur im Motorraum ausreichend genau zu erfassen und dementsprechend die Kennlinie der Kraftverstärkung abhängig von der Temperatur im Motorraum anzupassen und damit unterschiedliche Kennlinien für unterschiedliche Temperaturen zu erzeugen.

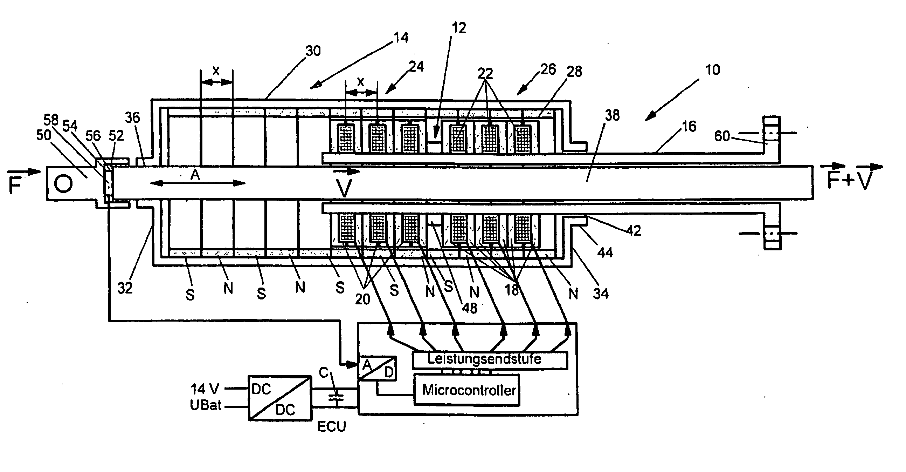

Weitere Merkmale, Eigenschaften, Vorteile und mögliche Abwandlungen werden anhand der nachstehenden Beschreibung erläutert, in der auf die beigefügten Zeichnungen Bezug genommen ist. Darin zeigt die einzige Figur der Zeichnung eine Ausführungsform eines erfindungsgemäßen Stabaktuators schematisch in perspektivischem Längsschnitt.

In der Figur ist eine Ausführungsform eines elektrischen Stabaktuator 10 veranschaulicht. Dieser Stabaktuator 10 hat einen im Wesentlichen hohlzylindrischen Ständer 12 und einen Läufer 14. Der Ständer 12 hat ein relativ dünnwandiges Tragrohr 16, an dessen äußerer Mantelfläche nebeneinander im Wesentlichen ringscheibenförmige Weicheisenelemente 18 befestigt sind. Zueinander benachbarte scheibenförmige Weicheisenelemente 18 sind so angeordnet, dass in dem Ständer 12 entlang dessen Umfang mehrere Nuten 20 im Abstand zueinander ausgebildet sind. In einer jeweiligen Nut 20 zwischen zwei benachbarten Weicheisenelementen 18 ist jeweils eine Ständerspule 22 aufgenommen. Die Weicheisenelemente 18 des Ständers 18 sind geblechte oder aus gepresstem und/oder gesintertem Metallpulver hergestellte weichmagnetische Formkörper. In dem gezeigten Beispiel hat der Ständer 12 zur Bildung einer zweiphasigen Anordnung des Linearaktors zwei Gruppen 24, 26 von Ständerspulen 22. Die Ständerspulen 22 haben eine Mittellängsachse, die mit der Arbeitsbewegungsrichtung A des Läufers 14 fluchtet.

Der Läufer 14 umgibt den Ständer 12 konzentrisch unter Bildung eines Arbeitsluftspaltes 28. Dabei hat der Läufer 14 eine Abfolge von mehreren Permanentmagnetringen N, S, die jeweils zu dem Ständer 12, genauer gesagt zu den Weicheisenelementen 18 mit den dazwischen aufgenommenen Ständerspule 22 hin abwechselnd magnetisch orientiert sind. Die Permanentmagnetringe N, S des Läufers 14 sind an ihrer von dem Arbeitsluftspalt 28 abgewandten Seite an der Innenwand eines Läuferrohres 30 angeordnet. Die Permanentmagnetringe N, S haben in der Arbeitsbewegungsrichtung A des Läufers 14 in etwa eine Abmessung x, die mit dem Mittenabstand zweier einander benachbarter Ständerspulen 22 bzw. dem Mittenabstand deren Nuten 20 übereinstimmt.

Die beiden Gruppen 24, 26 von Ständerspulen 22 sind, da es sich in diesem Ausführungsbeispiel um einen zweiphasigen permanent erregten Linearmotor handelt, voneinander durch einen Abstandshalter 48 um x/2 beabstandet. Dementsprechend werden sie auch mit um π/2 phasenversetztem Strom beaufschlagt um den Läufer 14 relativ zum Ständer 12 in Arbeitsbewegungsrichtung A zu verfahren.

Das Läuferrohr 30 ist an seinen beiden Stirnseiten 32, 34 verschlossen. An einer Stirnseite 32 (in der Figur links) ist das Läuferrohr 30 mit einem Stab 38 des Läufers 14 fest verbunden. Durch Verschweißen eines den Stab 38 umgreifenden Bundes 36 der Stirnseite 32 des Läuferrohres 30 mit dem Stab 38 kann eine starre Verbindung erreicht werden. An der anderen Stirnseite 34 des Läuferrohres 30 (in der Figur rechts) ist eine Öffnung 42 mit einer Gleitbuchse 44 vorgesehen, durch die das Tragrohr 16 des Ständers 12 herausragt. Dabei ist das Läuferrohr 30 in Arbeitsbewegungsrichtung A relativ zu dem Tragrohr 16 des Ständers 12 verschiebbar. Der Stab 38 des Läufers 14 ist koaxial zu dem Ständer 12 im Innern des Tragrohres 16 des Ständers 12 angeordnet und ist an dessen Innenwand gleitend beweglich aufgenommen. Damit ist der Stab 38 des Läufers 14 relativ zu dem Ständer 12 beweglich. Um die magnetischen Verluste möglichst gering zu halten, ist der Ringspalt zwischen dem Stab 38 und der Innenwand des Tragrohres 16 des Ständers 12 minimal dimensioniert ohne die Beweglichkeit des der Stab 38 relativ zu dem Ständer 12 negativ zu beeinflussen.

Außerdem sind der Stab 38 des Läufers 14 sowie das Tragrohr 16 und die Weicheisenelemente 18 des Ständers 12 so dimensioniert, dass der Stab 38 einen Teil des magnetischen Rückschlusses des Stabaktuators 10 bildet. Mit anderen Worten können das Tragrohr 16 und die Weicheisenelemente 18 des Ständers 12 unter Gesichtspunkten des magnetischen Flusses so bemessen sein, dass der Stab 38 wesentlichen einen Teil des magnetischen Rückschlusses des Stabaktuators 10 bildet. Da der Stab aus Gründen der mechanischen Festigkeit/Steifigkeit ohnehin einen bestimmten Durchmesser hat, können das Tragrohr 16 und die Weicheisenelemente 18 des Ständers 12 entsprechend magnetflussleitend "schwach" dimensioniert sein.

An dem mit dem Läuferrohr 30 verschweißten Ende des Stabes 38 ist dieser mit einem Flansch 50 zur Kraft-Einleitung versehen. Der Flansch 50 hat ein das Ende des Stabes 38 übergreifendes Sackloch 52, zwischen dessen Boden 54 und der Stirnfläche 56 des Ende des Stabes 38 ein Piezokraftsensor 58 aufgenommen ist. Mittels des Flansches 50 oder einer vergleichbaren Anordnung ist der Stab 38 dazu eingerichtet, eine Betätigungskraft F an seinem einen Ende aufzunehmen und an seinem anderen Ende die verstärkte Betätigungskraft F→ + V→ abzugeben, wobei V→ die durch den Läufer 14 aufgebrachte Motorkraft ist, die der Betätigungskraft F→ überlagert wird. Das Tragrohr 16 des Ständers 12 ragt an der Stirnseite 34 des Läuferrohrs 30 aus diesem heraus und ist mittels zum Beispiel eines Schraubflansches 60 zur Abstützung an einem ortsfesten Teil, zum Beispiel einem Getriebe oder einem sonstigen Aggregat eingerichtet. In dem Tragrohr 16 des Ständers 12 ist der Stab 38 angeordnet und reicht über den Schraubflansch 60 hinaus in das nicht weiter veranschaulichte Aggregat, um darin eine Stellaufgabe auszuführen, wenn der Stab 38 manuell und/oder elektrisch betätigt wird. Der Piezokraftsensor 58 erfasst die an dem Flansch 50 am einen Ende des Stabes aufgenommene Betätigungskraft relativ zu dem Ständer 12 und gibt ein die erfasste Kraft wiedergebendes Signal an eine elektronische Steuereinheit ECU ab.

Die elektronische Steuereinheit ECU hat einen A/D-Wandler zur prozessorgerechten Umsetzung des Signals aus dem Piezokraftsensor 58 zur Weiterverarbeitung durch einen Microcontroller, der dazu eingerichtet und programmiert ist, aus dem Kraft/Weg-Signal Ansteuersignale für die Ständerspulen 22 zu erzeugen, damit der Linearaktuator 10 eine Überlagerungskraft V→ bereitstellt. Auf diese Weise wird in Abhängigkeit von der am einen Ende des Stabes 38 eingeleiteten Größe F→ in Abhängigkeit von einer in dem Microcontroller realisierten Verstärkungsfunktion am anderen Ende des Stabes 38 eine entsprechende Ausgangsgröße F → + V → zur Verfügung gestellt.

Schließlich hat die elektronische Steuereinheit ECU einen DC/DC-Wandler, der an seiner Eingangsseite mit einer Gleichstromversorgung, zum Beispiel dem KFZ-Bordnetz, verbunden ist. An der Ausgangsseite des DC/DC-Wandlers ist eine Pufferkapazität C angeschlossen, so dass bei einem Betrieb des Stabaktuators auftretende Lastspitzen im Wesentlichen rückwirkungsfrei für die Gleichstromversorgung sind.

Die erläuterten Ausführungsformen eignen sich besonders, einen Hub von etwa +/- 25 mm bei einer maximalen Kraft von etwa 250 N und einem Kraftgradienten von 25 N/ms in einem relativ schmalen Bauraum von etwa 40 mm Durchmesser und einer Länge von etwa 100 mm zu realisieren. Dabei kann eine Betriebstemperatur von etwa -30°C bis +130°C und eine kurzzeitige Spitzentemperatur von etwa -40°C bis etwa +150°C ohne nennenswerte Einschränkung der Funktionalität herrschen.

Vorstehend ist eine zweiphasig zu betreibende Anordnung eines erfindungsgemäßen Linearaktors beschrieben. Es ist jedoch auch im Bereich der vorliegenden Erfindung, ein drei- oder mehrphasige Anordnung des Linearaktors zu gestalten. Dazu sind die weiteren Statorensysteme mit zugehörigen Spulen entsprechend dem/den vorgesehenen Phasenversätzen der elektrischen Antriebsleistung geometrisch entlang des Magneten des Läufers versetzt zu positionieren. Bei einem permanenterregten Motor ist die Rastkraft, also die Kraft, welche die Permanentmagnete bei stromlosem Motor hervorrufen, wenn der Stab 28 etwa manuell verschoben wird, zu der Anzahl der Phasen indirekt proportional. Mit anderen Worten sinkt die Rastkraft bei zunehmender Phasenzahl. Um einen möglichst rückwirkungsfreien Linearaktor bereitzustellen, empfiehlt sich der Einsatz eines zwei- oder mehrphasigen Systems.

Es versteht sich für einen Fachmann, dass einzelne Aspekte oder Merkmale der vorstehend beschriebenen unterschiedlichen Ausführungsformen auch untereinander und in beliebigen Unterkombinationen kombinierbar sind.

### Bezugszeichenliste

- 10: Stabaktuator
- 12: Ständer
- 14: Läufer
- 16: Tragrohr
- 18: Weicheisenelement
- 20: Nuten
- 22: Ständerspule
- 24, 26: Gruppen von Ständerspulen
- 28: Arbeitsluftspalt
- 30: Läuferrohr
- 32, 34: Stirnseiten
- 36: Bund der Stirnseite 32
- 38: Stab
- 40:
- 42: Öffnung
- 44: Gleitbuchse
- 46:
- 48: Abstandshalter
- 50: Flansch
- 52: Sackloch
- 54: Boden
- 56: Stirnfläche
- 58: Piezokraftsensor
- 60: Schraubflansch

- N, S: Permanentmagneten
- F: Betätigungskraft
- V: Motorkraft

## Patentansprüche

1. Stabaktuator (10), insbesondere für automotive Nebenantriebe
- mit einem Ständer (12), der zumindestens eine Ständerspule (22) und ein Tragrohr (16) aufweist, das zur Abstützung an einem ortsfesten Teil vorgesehen ist;
- mit einem Läufer (14), der zumindestens einen Permanentmagneten (N, S) aufweist, der den Ständer (12) umgibt und der ein Läuferrohr (30) aufweist, an dessen einer Stirnseite (34) das Tragrohr (16) aus diesem herausragt,
- mit einem Stab (38), der koaxial zum Ständer (12) in dessen Tragröhr (16) angeordnet und an dessen Innenwand gleitbeweglich gelagert ist,
- wobei der Läufer (14) axial relativ zum Ständer (12) verschieblich gelagert ist,
**dadurch gekennzeichnet,**
- **dass** der Läufer (14) mit dem Stab (38) zur Übertragung einer an einem seiner Enden eingeleiteten Betätigungskraft (F) und einer vom Läufer (14) aufgebrachten, der Betätigungskraft (F) überlagerten Motorkraft (V) verbunden ist, und
- **dass** der Stab (38) an beiden Enden des Tragrohrs (16) aus diesem herausragt.

2. Stabaktuator nach Anspruch 1, **dadurch gekennzeichnet, dass** der Läufer (14) relativ zum Ständer (12) drehbar gelagert ist.

3. Stabaktuator nach Anspruch 1 oder 2, **dadurch gekennzeichnet, dass**
- der Ständer (12) eine hohlzylindrische Gestalt aufweist und zumindest teilweise aus einem weichmagnetischen Material gebildet ist,
- in dem Ständer (12) entlang dessen Umfang mehrere Nuten (20) im Abstand zueinander ausgebildet sind, in denen jeweils eine Ständerspule (22) angeordnet ist,
- der Ständer (12), durch einen Arbeitsluftspalt (28) getrennt, mehreren Permanentmagnetringen (N, S) des Läufers (14) zugewandt ist, die jeweils zu dem Ständer (12) hin abwechselnd magnetisch orientiert sind,
- die Permanentmagnetringe (N, S) in einer Arbeitsbewegungsrichtung (A) des Läufers (14) in etwa eine Abmessung aufweisen, die mit dem Mittenabstand zweier einander benachbarter Nuten der Ständerspulen (22) übereinstimmt,
- die Permanentmagnetringe (N, S) des Läufers (14) an ihrer von dem Arbeitsluftspalt (28) abgewandten Seite an einem Läuferrohr (30) angeordnet sind, das mit dem Stab (38) verbunden ist, wobei der Stab (38) relativ zu dem Ständer (12) beweglich ist, und
- zumindest einen Teil des magnetischen Rückschlusses des Stabaktuators (10) bildet.

4. Stabaktuator nach einem der vorhergehenden Ansprüche, bei dem die Ständerspulen (22) eine Mittellängsachse haben, die mit der Arbeitsbewegungsrichtung des Läufers (14) fluchtet.

5. Stabaktuator nach einem der vorhergehenden Ansprüche, bei dem der Ständer (12) aus im Wesentlichen scheibenförmigen Weicheisenelementen (18) gebildet ist.

6. Stabaktuator nach einem der vorhergehenden Ansprüche, bei dem das Läuferrohr (30) an seinen beiden Stirnseiten (32,34), verschlossen ist, wobei an einer Stirnseite (32) eine starre Verbindung des Läuferrohres (30) mit dem Stab (38) vorgesehen ist und an der anderen Stirnseite (34) eine Öffnung (42) vorgesehen ist, durch die das Tragrohr (16) des Ständers (12) in Arbeitsbewegungsrichtung verschiebbar herausragt.

7. Stabaktuator nach einem der vorhergehenden Ansprüche, bei dem der Ständer (12) wenigstens zwei Gruppen (24, 26) von Ständerspulen (22) aufweist, die mit phasenversetztem Strom beaufschlagt werden, wobei die Gruppen (24, 26) der Ständerspulen (22) in Abhängigkeit von ihrer Anzahl in Arbeitsbewegungsrichtung des Läufers (14) entlang des Ständers (12) so versetzt sind, dass jeweils wenigstens eine Gruppe von Ständerspulen (22) mit den Permanentmagnetringen (N, S) des Läufers (14) im Wesentlichen fluchtet.

8. Stabaktuator nach einem der vorhergehenden Ansprüche, bei dem der Ständer (12) zumindest teilweise ein weichmagnetischer Formkörper, vorzugsweise aus gepresstem und/oder gesintertem Metallpulver ist.

9. Stabaktuator nach einem der vorhergehenden Ansprüche, bei dem der Stab (38) einen Kraft- und/oder Wegsensor (58) trägt, um die an seinem einen Ende aufgenommene Betätigungskraft und/oder eine Verschiebung oder Position des Stabes (38) relativ zu dem Ständer (12) zu erfassen und ein die erfasste Kraft / den erfassten Weg wiedergebendes Signal an eine elektronische Steuereinheit (ECU) zu leiten.

10. Stabaktuator nach einem der vorhergehenden Ansprüche, bei dem die elektronische Steuereinheit (ECU) dazu eingerichtet oder programmiert ist, aus dem Kraft/Weg-Signal für die Ständerspulen (22) Ansteuersignale zu erzeugen, so dass in Abhängigkeit von der am einen Ende des Stabes (38) eingeleiteten Größe in Abhängigkeit von einer Verstärkungsfunktion am anderen Ende des Stabes (38) eine entsprechende Ausgangsgröße zur Verfügung steht.

11. Stabaktuator nach einem der vorhergehenden Ansprüche, bei dem die elektronische Steuereinheit (ECU) einen DC/DC-Wandler aufweist, der an seiner Eingangsseite mit einer Gleichstromversorgung verbunden ist, und an dessen Ausgangsseite eine Pufferkapazität (C) angeschlossen ist, so dass bei einem Betrieb des Stabaktuators (10) auftretende Lastspitzen im Wesentlichen rückwirkungsfrei für die Gleichstromversorgung sind.

12. Stabaktuator einem der Ansprüche 9 bis 11, **dadurch gekennzeichnet, dass** ein Motorraum-Temperatursensor in die Steuereinheit (ECU) integriert ist.

13. Stabaktuator einem der Ansprüche 1 bis 12, **gekennzeichnet durch** eine Gelenkverbindung zur Anbindung des Stabaktuators (10) am ortsfesten Bauteil.

## Claims

1. A rod actuator (10), in particular for automotive auxiliary drives, comprising
- a stator (12) having at least one stator coil (22) and a supporting tube (16) provided for support at a stationary part,
- a rotor (14) having at least one permanent magnet (N, S) and surrounding the stator (12) and having a rotor tube (30) having an end face (34) on which the supporting tube (16) protrudes from the rotor tube,
- a rod (38) which is arranged coaxially with the stator (12) inside the supporting tube (16) thereof and is mounted for sliding movement on the inner wall thereof,
- the rotor (14) being mounted for axial displacement in relation to the stator (12),
**characterized in that**
- the rotor (14) is connected to the rod (38) for transmitting an actuating force (F) introduced at one of its ends and a motor force (V) applied by the rotor (14) and superimposed on the actuating force (F), and
- the rod (38) protrudes from the supporting tube (16) at both ends thereof.

2. The rod actuator according to claim 1, **characterized in that** the rotor (14) is mounted for rotation in relation to the stator (12).

3. The rod actuator according to claim 1 or 2, **characterized in that**
- the stator (12) has a hollow cylindrical shape and is formed at least in part of a soft magnetic material,
- a plurality of grooves (20) are formed at a distance from each other in the stator (12) along the circumference thereof, each groove having a stator coil (22) arranged therein,
- the stator (12), separated by a working air gap (28), faces a plurality of permanent magnet rings (N, S) of the rotor (14) which are each magnetically oriented in alternation toward the stator (12),
- the permanent magnet rings (N, S) have a dimension in an operating movement direction (A) of the rotor (14) roughly corresponding to the center distance of two adjacent grooves of the stator coils (22),
- the permanent magnet rings (N, S) of the rotor (14) are arranged at a rotor tube (30) on their sides facing away from the working air gap (28), the rotor tube being connected to the rod (38), the rod (38) being movable in relation to the stator (12) and
- forming at least a part of the magnetic return path of the rod actuator (10).

4. The rod actuator according to any of the preceding claims, in which the stator coils (22) have a center longitudinal axis in alignment with the operating movement direction of the rotor (14).

5. The rod actuator according to any of the preceding claims, in which the stator (12) is formed of substantially disk-shaped soft iron members (18).

6. The rod actuator according to any of the preceding claims, in which the rotor tube (30) is dosed on the two end faces (32,34) thereof, a rigid connection of the rotor tube (30) with the rod (38) being provided on one end face (32) and an opening (42) being provided on the other end face (34), the supporting tube (16) of the stator (12) protruding through the opening for displacement in the operating movement direction.

7. The rod actuator according to any of the preceding claims, in which the stator (12) includes at least two groups (24, 26) of stator coils (22) which are supplied with phase-shifted current, the groups (24, 26) of stator coils (22) being offset along the stator (12) in the operating movement direction of the rotor (14) depending on their number such that at least one respective group of stator coils (22) is substantially in alignment with the permanent magnet rings (N, S) of the rotor (14).

8. The rod actuator according to any of the preceding claims, in which the stator (12) is at least partly a soft magnetic molding, preferably made from compressed and/or sintered metal powder.

9. The rod actuator according to any of the preceding claims, in which the rod (38) carries a force and/or displacement sensor (58) to detect the actuating force absorbed at its one end and/or a displacement or position of the rod (38) in relation to the stator (12) and to transmit a signal reproducing the detected force /the detected distance to an electronic control unit (ECU).

10. The rod actuator according to any of the preceding claims, in which the electronic control unit (ECU) is configured or programmed to generate driving signals for the stator coils (22) from the force/displacement signal, so that a corresponding output quantity is available depending on the quantity introduced at one end of the rod (38) and depending on an intensifying function at the other end of the rod (38).

11. The rod actuator according to any of the preceding claims, in which the electronic control unit (ECU) includes a DC/DC converter the input side of which is connected to a direct current supply and the output side of which is connected to a buffer capacitor (C), so that any load peaks occurring during operation of the rod actuator (10) are substantially reactionless for the direct current supply.

12. The rod actuator according to any of claims 9 to 11, **characterized in that** an engine bay temperature sensor is integrated into the control unit (ECU).

13. The rod actuator according to any of claims 1 to 12, **characterized by** an articulation for connecting the rod actuator (10) to the stationary component.

## Revendications

1. Actionneur tige (10), en particulier pour des entraînements auxiliaires automobiles, comportant
- un stator (12) qui présente au moins une bobine de stator (22) et un tube support (16) prévu pour le maintien sur une pièce stationnaire ,
- un rotor (14) qui présente au moins un aimant permanent (N, S), qui entoure le stator (12) et qui présente un tube de rotor (30) sur une face frontale (34) duquel le tube support (16) fait saillie hors du tube de rotor,
- une tige (38) qui est agencée de façon coaxiale par rapport au stator (12) dans le tube support (16) de celui-ci et qui est montée à coulissement le long de sa paroi intérieure,
- le rotor (14) étant monté à déplacement axial par rapport au stator (12), **caractérisé en ce que**
- le rotor (14) est relié à la tige (38) pour transmettre une force d'actionnement (F) introduite à l'une de ses extrémités et une force motrice (V) appliquée par le rotor (14) et superposée à la force d'actionnement (F), et
- **en ce que** la tige (38) fait saillie hors du tube support (16) aux deux extrémités de celui-ci.

2. Actionneur tige selon la revendication 1, **caractérisé en ce que** le rotor (14) est monté mobile en rotation par rapport au stator (12).

3. Actionneur tige selon la revendication 1 ou 2, **caractérisé en ce que**
- le stator (12) présente une forme de cylindre creux et est réalisé au moins partiellement en un matériau magnétique doux,
- plusieurs gorges (20) sont réalisées dans le stator (12) le long de sa périphérie et à distance les unes par rapport aux autres, une bobine de stator (22) étant agencée dans chaque gorge,
- le stator (12), en étant séparé par un entrefer de travail (28), fait face à plusieurs anneaux d'aimant permanent (N, S) du rotor (14), qui sont chacun magnétiquement orientés en alternance vers le stator (12),
- les anneaux d'aimant permanent (N, S) présentent dans une direction de déplacement de fonctionnement (A) du rotor (14) un dimensionnement qui correspond approximativement à l'entraxe de deux gorges adjacentes des bobines de stator (22),
- les anneaux d'aimant permanent (N, S) du rotor (14), sur leur face opposée à l'entrefer de travail (28), sont agencés sur un tube de rotor (30) qui est relié à la tige (38), la tige (38) étant mobile par rapport au stator (12) et
- formant au moins une partie du reflux magnétique de l'actionneur tige (10).

4. Actionneur tige selon l'une des revendications précédentes, dans lequel les bobines de stator (22) présentant un axe longitudinal central qui est en alignement avec la direction de déplacement de fonctionnement du rotor (14).

5. Actionneur tige selon l'une des revendications précédentes, dans lequel le stator (12) est composé d'éléments en fer doux (18) sensiblement en forme de disque.

6. Actionneur tige selon l'une des revendications précédentes, dans lequel le tube de rotor (30) est fermé sur ses deux faces frontales (32,34), une connexion fixe entre le tube de rotor (30) et la tige (38) étant prévue sur une face frontale (32), et un orifice (42) étant prévu sur l'autre face frontale (34), le tube support (16) du stator (12) faisant saillie à travers l'orifice en étant déplaçable dans la direction de déplacement de fonctionnement.

7. Actionneur tige selon l'une des revendications précédentes, dans lequel le stator (12) présente au moins deux groupes (24, 26) de bobines de stator (22) qui sont alimentés en courant déphasé, les groupes (24, 26) des bobines de stator (22) étant décalés, selon leur nombre, le long du stator (12) dans la direction de déplacement de fonctionnement du rotor (14) de telle sorte qu'au moins un groupe respectif de bobines de stator (22) est sensiblement en alignement avec les anneaux d'aimant permanent (N, S) du rotor (14).

8. Actionneur tige selon l'une des revendications précédentes, dans lequel le stator (12) est au moins partiellement un corps moulé magnétique doux, de préférence en poudre de métal pressée et/ou frittée.

9. Actionneur tige selon l'une des revendications précédentes, dans lequel la tige (38) porte un capteur de force et/ou de déplacement (58) pour détecter la force d'actionnement reçue à l'une de ses extrémités et/ou un déplacement ou une position de la tige (38) par rapport au stator (12), et pour envoyer un signal à une unité de commande électronique (ECU) qui représente la force détectée/le parcours détecté.

10. Actionneur tige selon l'une des revendications précédentes, dans lequel l'unité de commande électronique (ECU) est conçue ou programmée de manière à générer des signaux de pilotage pour les bobines de stator (22) à partir du signal de force/de déplacement de sorte qu'en fonction d'une grandeur introduite à l'une des extrémités de la tige (38) et d'une fonction de renforcement à l'autre extrémité de la tige (38), une grandeur de sortie correspondante est disponible.

11. Actionneur tige selon l'une des revendications précédentes, dans lequel l'unité de commande électronique (ECU) présente un convertisseur à courant continu qui est relié à une alimentation en courant continu sur sa face d'entrée, une capacité tampon (C) étant reliée à sa face de sortie, de sorte que des pics de charge intervenant lors d'un fonctionnement de l'actionneur tige (10) sont sensiblement sans effets rétroactifs pour l'alimentation en courant continu.

12. Actionneur tige selon l'une des revendications 9 à 11, **caractérisé en ce qu'**un capteur de température de compartiment moteur est intégré dans l'unité de commande (ECU).

13. Actionneur tige selon l'une des revendications 1 à 12, **caractérisé par** un assemblage articulé pour le raccordement de l'actionneur tige (10) au composant stationnaire.
